# EUROPEAN PATENT APPLICATION

(11) **EP 0 983 729 A1**
(43) Date of publication of application: **08.03.2000**
(21) Application number: 99401983.4
(22) Date of filing: 04.08.1999
(51) Int. Cl.: A23L 3/375

(54) **Method and apparatus for the freezing of food products**

(30) Priority: 02.09.1998 DE 19840037
(71) Applicant: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventor: Himpeler, Willy, Air Liquide GmbH, 40235 Düsseldorf (DE); Bornheim, Hubert, 50739 Köln (DE)
(74) Representative: Mellul, Sylvie Lisette

(57) **Abstract**

The invention relates to a method for the freezing of frozen goods (1), for example fish or meat, by means of thermodynamic exchange processes and to a freezing apparatus, in particular for carrying out the method.

Since the goods (1) transported on a conveyor band (2) dip at least partially, and preferably also to a variable depth, depending on the goods, into an accessory trough (5) filled with liquid nitrogen, a greater freezing depth can be achieved in the goods (1), with the result that a subsequent dwell time in a freezing chamber for freezing through is advantageously reduced, so that the goods (1) can be frozen through and delivered for further processing altogether more quickly. In addition to storage costs which can be saved, shorter transit times advantageously lead to higher productivity. Moreover, advantageously, distortion of the goods (1) and/or separation of layers or part-layers of the goods (1) are avoided.

The invention can also be used in existing freezing apparatuses by the retrofitting of an accessory trough (5), for example above collecting troughs (9) which are conventionally present.

## Description

The invention relates to a method for the freezing of food products, so-called frozen goods, for example fish or meat, by means of thermodynamic exchange processes, according to the pre-characterizing clause of Claim 1, and to an apparatus, in particular for carrying out the method, according to the pre-characterizing clause of Claim 5.

Freezing methods and apparatuses for many uses and purposes are known. In addition to originally purely preserving functions, they are becoming increasingly important nowadays, particularly in modern food technology and processing. The knowledge that food products hard-frozen in this way, in particular by shock, lose scarcely any vitamins or nutrients has been conducive to this development, as has the finding that deep-frozen food products can often be processed further more easily than those at ambient temperature.

The refrigerant used in this case is liquid nitrogen (N2) which is one of the more common elements and can also be obtained very simply in relatively large quantities on an industrial scale, for example by air decomposition, that is to say by the fractionation of liquid air. The liquid nitrogen causes very rapid thermodynamic exchange, particularly on the surface of the food products, so that a thin, shock-frozen surface layer is obtained on the food product. However, insofar as liquid nitrogen does not act uniformly in time on the surface of the food products, distortions regularly occur, which, in particular, make it difficult for the food products to be processed further or to be packaged as intended, for example for ultimate consumers. Another problem is that layers and/or part-layers in the food product are separated because of thermal stresses which occur during freezing and between the shock-frozen surface and the initially unfrozen interior of the goods.

To avoid distortion of the food products during the freezing process, in which the food product is hard-frozen by shock, and/or to prevent layers or part-layers of the food product to be frozen from falling apart or separating in pieces, it is known to spray goods, transported on a conveyor band, with liquid nitrogen, in such a way that the surface of the goods is hard-frozen first briefly and with care, then vigorously, at all events always as homogeneously as possible from all sides and preferably to a specific depth which depends, in particular, on an average spatial volume of identical food products and which critically influences the appearance of frozen food products.

In order, at the same time, to prevent the goods from adhering to the conveyor band, it is also known to impregnate the conveyor band continuously with liquid nitrogen beforehand and/or during the freezing process.

The goods, thus hard-frozen all-round from all sides, on the underside by being laid onto the conveyor band impregnated with liquid nitrogen and on the top side by being sprayed with liquid nitrogen, are subsequently intermediately stored in a freezing chamber at, for example, about -12°C, the interior of the goods matching the temperature within a period of up to about 12 hours, in such a way that they can then be delivered, altogether frozen through, for further processing.

The object on which the invention is based is to specify measures for the improved freezing of food products, which have an equally good effect on different food products, counteract distortion or separation of layers in the goods and allow freezing in a short time.

This object is achieved, according to the invention, by means of a method according to Claim 1 and by means of an apparatus according to Claim 5. Further, particularly advantageous embodiments of the invention are disclosed in the respective subclaims.

The method according to the invention for the freezing of frozen goods, for example fish or meat, in which, by means of thermodynamic exchange processes, in a first method step, only the surface of the goods is hard-frozen by shock, in that the goods are transported on a conveyor band impregnated with liquid nitrogen (N₂), that side of the frozen goods which faces the conveyor band being directly hard-frozen after contact with the conveyor band, and the goods, thus chilled on one side from below, are, if appropriate, first simultaneously frosted with care in a dwell zone on the top side, too, by being sprayed with liquid nitrogen, and are then hard-frozen in a freezing zone; and, in a second method step, the goods, hard-frozen all-round on the surfaces, are intermediately stored in a freezing chamber, until the interior of the goods is also hard-frozen, and can thus be delivered, altogether frozen through, for further processing; is distinguished in that the goods, while being sprayed with liquid nitrogen in the region of the freezing zone, are transported through an accessory trough additionally arranged there and filled with liquid nitrogen and, at the same time, dip at least partially into the liquid nitrogen.

The apparatus according to the invention, in particular for carrying out the method according to the invention, for the freezing of frozen goods, for example fish or meat, with a chilling chamber comprising, if appropriate, a dwell zone and a freezing zone, through which leads a conveyor band transporting the goods and capable of being impregnated with liquid nitrogen; and with a nitrogen circulation system, in particular having at least one nozzle, through which liquid nitrogen can flow in a regulatable manner onto the conveyor band and goods, with a collecting trough for excess nitrogen, the said collecting trough being arranged in the jet region of the nozzle and below the conveyor band, with a fill-up storage reservoir for liquid nitrogen, with a conduit system which connects at least the collecting trough to the storage reservoir and the latter to the nozzle, and with a conveying device which conveys liquid nitrogen out of the storage reservoir to the nozzle; is distinguished in that the conveyor band can be led through an accessory trough arranged in the region of the freezing zone and filled with liquid nitrogen, in such a way that the goods dip at least partially into the liquid nitrogen.

Since the goods dip at least partially into an accessory trough filled with liquid nitrogen, a greater freezing depth can be achieved in the frozen goods, with the result that a subsequent dwell time in the freezing chamber is advantageously reduced, so that the goods can be frozen through and delivered for further processing altogether more quickly. In addition to storage costs which can be saved, shorter transit times advantageously lead to higher productivity. Moreover, advantageously, distortion of the frozen foods and/or separation of layers or part-layers of the goods are avoided.

Preferably, according to the invention, the depth to which the goods dip into the accessory trough filled with liquid nitrogen can be varied, depending on the dimensions of the goods, in particular depending on an average height of identical goods. Effects can thereby be achieved, on the underside of the goods, which are similar to those achieved by spraying the top side of the goods with liquid nitrogen.

According to the invention, the invention is preferably also distinguished in that a transport time of the goods through the accessory trough is determined in dependence on desired freezing depths in the goods.

Preferably, the conveyor band can be led through the accessory trough filled with liquid nitrogen, in such a way that, in particular, large-volume goods dip entirely into the liquid nitrogen, so that liquid nitrogen also washes round the top side of the goods. Advantageously, a surface hard-frozen by shock can thus be produced on the goods quickly and effectively.

Preferably, particularly when the goods are led entirely through the liquid nitrogen bath, the conveyor band has holding devices which press the goods correspondingly below the fluid level of the liquid nitrogen. This advantageously ensures that the goods are dipped entirely.

In the simplest of embodiments, the conveyor band is led through the accessory trough filled with liquid nitrogen by means of rigid restraint rails.

In a further development of this embodiment, the restraint rails are preferably designed adjustably and thus advantageously make it possible to vary the depth to which the goods dip into the liquid nitrogen, the variable restraint rails also, of course, being adjustable in such a way that, as in the known apparatuses, the conveyor band is not led at all through the accessory trough filled with liquid nitrogen, particularly in the case of small or flat goods.

In order to avoid complicated holding structures, rigid and adjustable restraint rails are preferably arranged on the accessory trough.

Particularly with regard to existing apparatuses, the accessory trough is capable of being retrofitted and is designed as a separate component which is arranged preferably between the conveyor band and collecting trough. In the case of apparatuses to be manufactured in future, the accessory trough may preferably be designed, according to the invention, in such a way that at the same time it forms the collecting trough, the accessory troughs preferably having a device, in particular an outflow capable of being shut off, for integration into the nitrogen circulation system.

Further advantages and embodiments of the present invention are described with reference to an exemplary embodiment, specifically of a conventional freezing apparatus which is retrofitted with an accessory trough, but to which, however, use of the invention is not restricted, and with reference to the drawing, in which:
- Figure 1: shows diagrammatically a freezing apparatus with an accessory trough arranged, according to the invention, between a conveyor band and a collecting trough; and

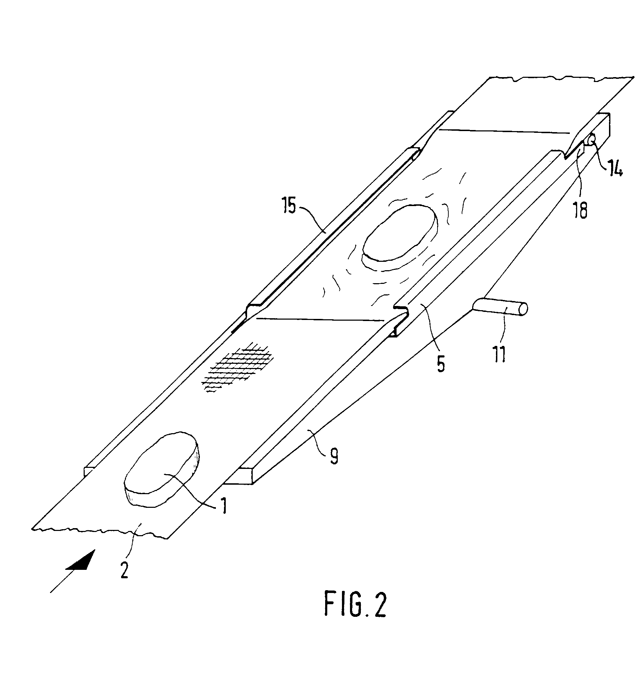

- Figure 2: shows an enlarged detail of the accessory trough according to Figure 1 arranged above the collecting trough.

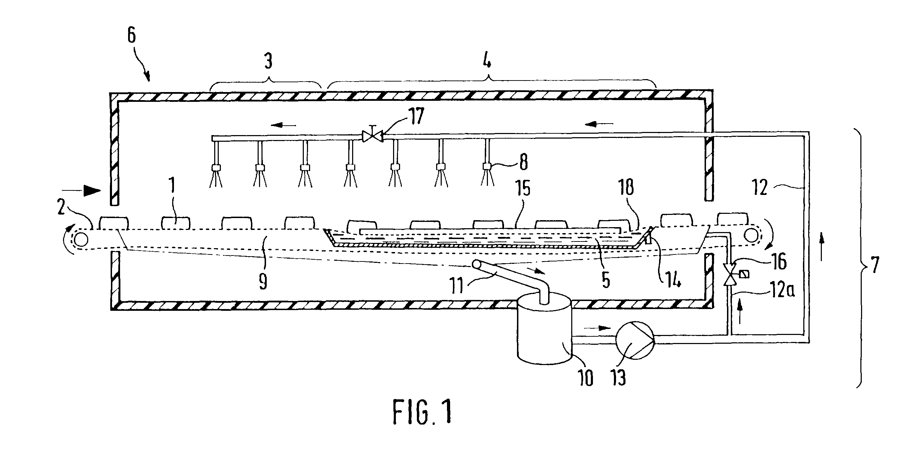

Figure 1 shows diagrammatically a conventional freezing apparatus, to which, however, use of the invention is not restricted, for the freezing of frozen goods 1, for example fish or meat, with a chilling chamber 6. The chilling chamber, standing on firm ground, consists of a casing insulated with polyurethane foam and cladded with high-grade steel, in the form of an upturned U, and comprises a dwell zone 3 and a freezing zone 4, through which leads a conveyor band 2 transporting the frozen goods 1 and impregnated with liquid nitrogen. The apparatus has, furthermore, a nitrogen circulation system 7. This comprises, in particular, at least one nozzle 8, through which liquid nitrogen can flow in a regulatable manner onto the conveyor band 2 and goods 1, a collecting trough 9 for excess nitrogen, said collecting trough being arranged in the jet region of the nozzle 8 and below the conveyor band 2, a fill-up storage reservoir 10 for liquid nitrogen, a conduit system 11, 12, 12a, which connects at least the collecting trough 9 to the storage reservoir 10 and the latter to the nozzle 8, and a conveying device 13 which conveys liquid nitrogen out of the storage reservoir 10 to the nozzle 8.

Arranged in the region of the freezing zone 4, between the conveyor band 2 and collecting trough 9, is an accessory trough 5 which is filled with liquid nitrogen and through which the conveyor band 2 can be led in such a way that the goods 1 dip at least partially in the liquid nitrogen. Preferably, restraint rails 15 are provided for leading the conveyor band 2 through the accessory trough 5 filled with liquid nitrogen. By means of these restraint rails 15, designed rigidly in the exemplary embodiment, the conveyor band 2 can be led at a specific depth through the accessory trough 5 filled with liquid nitrogen. Alternatively, particularly for large-volume goods 1, the restraint rails may be designed adjustably in order to vary the depth to which the goods 1 dip into the liquid nitrogen.

The accessory trough 5 is provided, at one end 18, with an outflow 14 which is capable of being shut off and which is opened after the end of production, in order to allow the excess nitrogen to flow out. Water, which has collected in the accessory trough 5 after the end of production during the cleaning of the plant, may also flow out via this outflow 14. The liquid nitrogen, which has built up to about 20 mm to 40 mm, runs from the accessory trough 5 into the lower collecting trough 9 and is collected in the storage reservoir 10 via the discharge conduit 11. The storage reservoir 10 is preferably a vacuum-insulated, cylindrical vessel 10 which, in the exemplary embodiment, has a capacity of about 35 l. The liquid nitrogen is conveyed from this vessel 10 through a feed conduit 12 to the nozzles 8 by means of a conveying device 13 and is sprayed onto the upper face of the conveyor band 2 and onto the goods 1. The conveying device 13 is preferably a pump 13 provided especially for cryogenic fluids. The conveyor band 2 is impregnated continuously with liquid nitrogen, while the method is being carried out, by being led through the collecting trough 9. The collecting trough 9 is supplied with liquid nitrogen via a feed conduit 12a and a controlled solenoid valve 16. The accessory trough 5 is filled with liquid nitrogen via the nozzles 8 which, in turn, are supplied by the conveying device 13. The liquid nitrogen thus circulates from the accessory trough 5 into the collecting trough 9 and from there back into the vacuum-insulated, cylindrical vessel 10.

In order to prevent the goods 1 from adhering to the conveyor band 2, the conveyor band 2, which is a special polyester band in the exemplary embodiment, is impregnated with liquid nitrogen, in that the plastic band 2 is first led for about 10 to 15 minutes, in a so-called "cold" run, through the collecting trough 9 filled with liquid nitrogen and, moreover, is sprayed with liquid nitrogen by the nozzles 8. In the case of bands 2 consisting of polyester, the degree of saturation of the conveyor band 2 with liquid nitrogen can be seen from colour changes. As soon as the polyester band 2 is soaked with liquid nitrogen, the goods 1 are placed in pieces onto the conveyor band 2 impregnated with liquid nitrogen. When the goods 1 come into contact with the nitrogen-impregnated conveyor band 2, a thermodynamic exchange takes place. In this case, that side of the goods 1 which faces the conveyor band 2 becomes hard in a few seconds. This shock-like hard-freezing of a top side of the goods 1 advantageously prevents the latter from adhering to the conveyor band 2 and layers or part-layers of large-area parts of goods 1 from being distorted and/or separated. The goods 1, thus hard-frozen on one side from below, are subsequently first frosted with care in a dwell zone 3 on the top side, too, by means of liquid nitrogen, and are then hard-frozen in a freezing zone 4. Frosting in the dwell zone 3 and hard-freezing in the freezing zone 4 are carried out by means of nozzles 8 set to an appropriate spray volume. For the metering, in particular for the throttling of the nozzles 8 in the dwell zone 3, a metering valve 17 is arranged in the feed conduit 12. Control of the metering valve 17 may be designed manually or else electromagnetically.

During spraying with liquid nitrogen in the region of the freezing zone 4, the goods 1 are transported through an accessory trough 5 which, according to the invention, is additionally arranged there and is filled with liquid nitrogen, the goods 1 at the same time dipping at least partially into the liquid nitrogen. A thermodynamic exchange also simultaneously takes place between the top side of the goods 1 and the liquid nitrogen flowing out through the nozzles 8.

After the restrained guidance of the conveyor band 2 at the end of the accessory trough 5, the conveyor band 2 runs over so-called "VA plates" which are not illustrated, the residual nitrogen dripping off from the impregnated conveyor band 2. The ready-goods 1 can subsequently be extracted at a delivery point. The goods 1, hard-frozen all-round on the surfaces, are subsequently intermediately stored in a freezing chamber, until the interior of the goods 1 is also hard-frozen, and, altogether frozen through, can be delivered for further processing.

The invention is distinguished, in particular, in that, as a result of the, if appropriate, restrained transport of the goods 1 through an accessory trough 2 filled with liquid nitrogen, the said goods "float" at least partially in the liquid nitrogen, with the result that a greater freezing depth can be achieved in the frozen goods 1 and a dwell time in the freezing chamber is reduced, so that the goods can be frozen through and delivered for further processing altogether more quickly. In addition to storage costs which can be saved, these transit times lead to higher productivity.

## Claims

1. Method for the freezing of frozen goods (1), for example fish or meat, in which, by means of thermodynamic exchange processes,
- in a first method step, only the surface of the goods (1) is hard-frozen by shock, in that:
- the goods (1) are transported on a conveyor band (2) impregnated with liquid nitrogen (N₂), that side of the goods (1) which faces the conveyor band (2) being directly hard-frozen after contact with the conveyor band (2),
and
- the goods (1), thus hard-frozen on one side from below, are, if appropriate, first simultaneously frosted with care in a dwell zone (3) on the top side, too, by being sprayed with liquid nitrogen, and are then hard-frozen in a freezing zone (4);
- and, in a second method step, the goods (1), hard-frozen all-round on the surfaces, are intermediately stored in a freezing chamber, until the interior of the goods (1) is also hard-frozen, and can thus be delivered, altogether frozen through, for further processing;
characterized in that
- the goods (1), while being sprayed with liquid nitrogen in the region of the freezing zone (4), are transported through an accessory trough (5) additionally arranged there and filled with liquid nitrogen and, at the same time, dip at least partially into the liquid nitrogen.

2. Method according to Claim 1, characterized in that the depth to which the goods (1) dip into the accessory trough (5) filled with liquid nitrogen varies, depending on the dimensions of the goods (1), in particular depending on an average height of identical goods (1).

3. Method according to Claim 1 or 2, characterized in that the goods (1) dip entirely into the liquid nitrogen, so that liquid nitrogen also washes round the top side of the goods (1).

4. Method according to one of Claims 1 to 3, characterized in that a transport time of the goods (1) through the accessory trough (5) is determined in dependence on desired freezing depths in the goods (1).

5. Apparatus, in particular for carrying out the method according to one of the preceding claims, for the freezing of goods (1), for example fish or meat, with
- a chilling chamber (6) comprising,
- if appropriate, a dwell zone (3) and
- a freezing zone (4),
through which leads a conveyor band (2) transporting the goods (1) and capable of being impregnated with liquid nitrogen;
and
- a nitrogen circulation system (7), in particular with
- at least one nozzle (8), through which liquid nitrogen can flow in a regulatable manner onto the conveyor band (2) and goods (1),
- a collecting trough (9) for excess nitrogen, the said collecting trough being arranged in the jet region of the nozzle (8) and below the conveyor band (2),
- a fill-up storage reservoir (10) for liquid nitrogen,
- a conduit system (11, 12, 12a) which connects at least the collecting trough (9) to the storage reservoir (10) and the latter to the nozzle (8), and
- a conveying device (13) which conveys liquid nitrogen out of the storage reservoir (10) to the nozzle (8);
characterized in that
- the conveyor band (2) can be led through an accessory trough (5) arranged in the region of the freezing zone (4) and filled with liquid nitrogen, in such a way that the goods (1) dip at least partially into the liquid nitrogen.

6. Apparatus according to Claim 5, characterized in that the depth to which the goods (1) dip into the accessory trough (5) filled with liquid nitrogen can be varied, depending on the dimensions of the goods (1), in particular depending on an average height of identical goods (1).

7. Apparatus according to Claim 5 or 6, characterized in that the conveyor band (2) can be led through the accessory trough (5) filled with liquid nitrogen, in such a way that the goods (1) dip entirely into the liquid nitrogen and liquid nitrogen also washes round the top side of the goods (1).

8. Apparatus according to Claim 7, characterized in that the conveyor band has holding devices which press the goods correspondingly below the fluid level of the liquid nitrogen.

9. Apparatus according to one of Claims 5 to 8, characterized in that restraint rails (15) are provided for leading the conveyor band (2) through the accessory trough (5) filled with liquid nitrogen.

10. Apparatus according to Claim 9, characterized in that the restraint rails (15) are designed adjustably in order to vary the depth to which the goods (1) dip into the liquid nitrogen.

11. Apparatus according to Claim 9 or 10, characterized in that the restraint rails (15) are arranged on the accessory trough (5).

12. Apparatus according to one of Claims 5 to 11, characterized in that the accessory trough (5) is arranged between the conveyor band (2) and collecting trough (9).

13. Apparatus according to one of Claims 5 to 12, characterized in that the accessory trough (5) at the same time forms the collecting trough (9).

14. Apparatus according to Claim 12 or 13, characterized in that the accessory trough (5) has a device, in particular an outflow (14) capable of being cut off, for integration into the nitrogen circulation system (7).
